# EUROPÄISCHE PATENTSCHRIFT

(11) **EP 2 920 776 B1**
(45) Veröffentlichungstag und Bekanntmachung des Hinweises auf die Patenterteilung: **01.03.2017**
(21) Anmeldenummer: 13783042.8
(22) Anmeldetag: 24.10.2013
(51) Int. Cl.: G05B 15/02, A47J 36/00, G08C 23/04, G08C 17/02, F24C 7/08

(54) **HAUSHALTSGERÄT MIT BEDIENELEMENT**
HOUSEHOLD APPLIANCE WITH CONTROL ELEMENT
APPAREIL ÉLECTROMÉNAGER AVEC UN ÉLÉMENT DE COMMANDE

(30) Priorität: 13.11.2012 DE 102012220615
(43) Veröffentlichungstag der Anmeldung: 23.09.2015
(73) Patentinhaber: BSH Hausgeräte GmbH, 81739 München (DE)
(72) Erfinder: GERL, Markus, 83349 Palling (DE)
(86) Internationale Anmeldenummer: PCT/EP2013/072271
(87) Internationale Veröffentlichungsnummer: WO 2014/075886

(56) Entgegenhaltungen:
- EP-A1- 2 363 647
- EP-A1- 2 420 735
- EP-A2- 1 107 647
- WO-A2-2008/003572
- WO-A2-2012/118455
- GB-A- 2 422 692
- US-A1- 2007 188 290
- US-A1- 2011 153 871

## Beschreibung

Die folgende Erfindung betrifft ein Haushaltsgerät, insbesondere ein Gargerät.

Aus dem Stand der Technik, beispielsweise der EP1962167A1, sind Bedienelemente bekannt, welche zur Werte- bzw. Parameterverstellung von Haushaltsgeräten geeignet sind. Dazu zählen u.a. Knebel am Gargerät zum Verstellen der Temperatur oder Betriebsart oder Knebel am Kochfeld zum Verstellen der Gasstufe.

Zudem sind aus dem Stand der Technik eine Reihe von Anwendungen für externe Datenquellen, beispielsweise Funkuhren, Onlinedatenbanken, Wartungsdienste usw. für Haushaltsgeräte bekannt, die ein Datenkommunikationssystem benötigen. Alternativ zu der Möglichkeit über eine kabelgebundene Datenkommunikationslösung an solche externen Anwendungen zu gelangen, bietet sich die kabellose Variante bei Haushaltsgeräten besonders an, da diese meist dezentral, variabel sowie unzugänglich im Haus angeordnet sind.

Darüber hinaus ist aus der EP2420735A1 eine Bedienvorrichtung für ein Hausgerät bekannt. Diese Bedienvorrichtung mit einem Bedienelement, welches auf einer Bedienfläche des mit der Bedienvorrichtung steuerbaren Hausgeräts mittels Magnetkraft haltbar ist und relativ zur Bedienfläche bewegbar und von dort abnehmbar positionierbar ist, und das Bedienelement eine integrierte und Energie drahtlos übertragende Energieversorgungseinrichtung aufweist, wobei in dem Bedienelement zumindest eine erste Spule der Energieversorgungseinrichtung angeordnet ist, welche in ein Ferritmaterial eingebettet ist.

Weiterer relevanter Stand der Technik ist in der US2011/153871 A1 zu finden.

Bisherige kabellose Lösungen scheitern an der schlechten Empfangsqualität solch eines Datenkommunikationssystems, da das Haushaltsgerät aufgrund seiner Einbaulage zwischen anderen Gegenständen und seines metallischen Gehäuses gegen guten Empfang abgeschirmt ist.

Die Aufgabe der vorliegenden Erfindung ist es deshalb, die drahtlosen Empfangs- und Sendeeigenschaften des Haushaltsgeräts zu externen Datenquellen zu verbessern.

Erfindungsgemäß wird die Aufgabe jeweils durch die Gesamtheit der Merkmale der unabhängigen Ansprüche gelöst. Weitere vorteilhafte Ausgestaltungen der Erfindung sind in den Unteransprüchen beschrieben.

Erfindungsgemäß ist ein Haushaltsgerät, insbesondere ein Gargerät, mit einem in eine Gerätefront versenkbar ausgebildeten Bedienelement, vorzugsweise ein Drehwähler zur Werte- und/oder Parameterverstellung des Haushaltsgeräts, mit einer Antenne zur Kommunikation mit einer externen Datenquelle ausgeführt. Da die Bedienelemente standardmäßig in den Raum, z. B. in die Küche weisen, ist demzufolge auch die Antenne dem Zentrum des Raumes zugewandt. Durch die konstruktive Ausgestaltung, dass das Bedienelement eine Antenne aufweist, wird eine verbesserte Empfangs-/Sendeeigenschaft des Haushaltsgeräts erzielt, da davon ausgegangen wird, dass im Zentrum des Raumes eine bessere Empfangsversorgung als im Randbereich des Raumes herrscht. Dabei ist das Bedienelement als Drehwähler zur Werte- und/oder Parameterverstellung des Haushaltsgeräts ausgebildet. Das Haushaltsgerät weist zumindest ein Sendersystem und/oder Empfangssystem auf. Dieses Kommunikationssystem dienen dem Haushaltsgerät zur drahtlosen Kopplung an ein Datenkommunikationssystem, wie z. B. dem WLAN und somit dem Internetzugang.

Die Kappe des Bedienelements ist als Antenne ausgeführt. Dabei dient die Kappe des Bedienelements, welche vorzugsweise aus einem funkleitfähigen Material hergestellt ist, als Antenne des Sendersystems und/oder Empfangssystems. Durch diese Anordnung befindet sich die Antenne des Kommunikationssystems vor den abschirmenden Bauteilen der Gerätefront und erzielt einen besseren Empfang.

Vorzugsweise ist das Bedienelement oder zumindest die Kappe ganz oder teilweise versenkbar in die Gerätefront ausgebildet. Durch diese Funktion ist die Kappe des Bedienelements mit der integrierten Antenne des Sende- und/oder Empfangssystems einer Kommunikationseinheit im Zustand der Benutzung des Haushaltsgeräts ausgefahren und somit vor der Gerätefront des Haushaltsgeräts, was zu einer verbesserten Empfangs- und Sendeleistung führt. Im versenkten Zustand des Bedienelements verschwindet die Kappe und somit die Antenne in der Front des Gargeräts, was zu einer ansehnlichen Optik des Haushaltsgeräts führt. Somit ist das Bedienelement in Richtung der Drehachse axial zwischen einer Betriebsstellung und einer Ruhestellung bewegbar. Diese versenkbare Betätigung des Bedienelements ist vorzugsweise auch zur Aktivierung bzw. Deaktivierung des Kommunikationssystems und/oder der Sende- und Empfangseinheit vorgesehen. Somit ist das Kommunikationssystem im eingefahrenen Zustand des Bedienelements in einem Aus- oder Standby-Betrieb und im ausgefahrenen Zustand des Bedienelements im Sende- und Empfangsbetrieb.

Gemäß einer Variante weist das Bedienelement flexible Leiterbahnen auf. Diese flexiblen Leiterbahnen ermöglichen eine Signalübertragung über die Versenkmechanik hinweg von der Kappe zum Kommunikationssystem. Dies ist besonders wichtig, da die Versenkmechanik in Ausfahrrichtung und in Drehrichtung zur Werteverstellung flexibel ausgebildet sein muss.

Gemäß einer Variante weist das Bedienelement eingespritzte Leiterbahnen auf. Bei dieser Variante übertragen die Einzelteile der Versenkmechanik mittels eingespritzter Leiterbahnen das Signal von der Kappe zum Kommunikationssystem sowie in die Gegenrichtung.

Vorzugsweise weist das Bedienelement eine elektrische Platine mit Leiterplatten zur Kontaktierung auf. Die Kontaktierung der flexiblen oder eingespritzten Leiterbahnen zur Geräteelektronik, insbesondere zum Kommunikationssystem wird mittels einer Steckverbindung an der Schalteraufnahme realisiert. Um die notwendige elektronische Verbindung beim Drehen des Griffes zu ermöglichen, wird eine Platine mit Leiterbahnen und kontaktierenden Schleifkontakten eingesetzt.

Vorzugsweise weist das Bedienelement ein Anzeigenelement auf. Das Anzeigenelement zeigt insbesondere den Empfang, den Versand oder die Empfangsqualität an. Das Anzeigenelement ist besonders nützlich, um den Benutzer des Haushaltsgeräts über den Status des Kommunikationssystems sowie den Sende- und Empfangseigenschaften des Haushaltsgeräts zu informieren.

Die Erfindung löst die Aufgabe mit einem Haushaltsgerät, insbesondere einem Gargerät, aufweisend ein vorangegangenes Bedienelement. Die Sende-/Empfangseigenschaften des Kommunikationssystems des Haushaltsgeräts sind besonders gut, wenn zumindest ein Bauteil, insbesondere die in der Kappe integrierte Antenne, zumindest in einer Betriebsstellung vor der Gerätefront angeordnet ist.

Weitere Vorteile und Einzelheiten der Erfindung werden anhand der in den schematischen Figuren dargestellten Ausführungsbeispielen näher erläutert. Dabei zeigt
- Fig. 1: eine schematische perspektivische Darstellung eines Ausführungsbeispiels eines erfindungsgemäßen Haushaltsgerätes mit einem Ausführungsbeispiel eines erfindungsgemäßen Bedienelements;
- Fig. 2: eine schematische Darstellung eines Bedienelements nach einem ersten Ausführungsbeispiel;
- Fig. 3: eine schematische Darstellung eines Bedienelements nach einem zweiten Ausführungsbeispiel; und
- Fig. 4: eine schematische Darstellung einer Platine mit Leiterbahnen.

In den Figuren werden gleiche oder funktionsgleiche Elemente mit den gleichen Bezugszeichen versehen.

Die folgenden Figuren zeigen das erfindungsgemäße Bedienelement für ein Hausgerät am Beispiel eines Gargeräts. Dadurch ist die Erfindung jedoch nicht auf den Einsatz in einem Gargerät beschränkt, sondern kann in allen Arten von Haushaltsgeräten, wie z. B. Kochfeldern, Waschmaschinen, Geschirrspülmaschinen, Trocknern, Kühlgeräten, usw. eingesetzt sein.

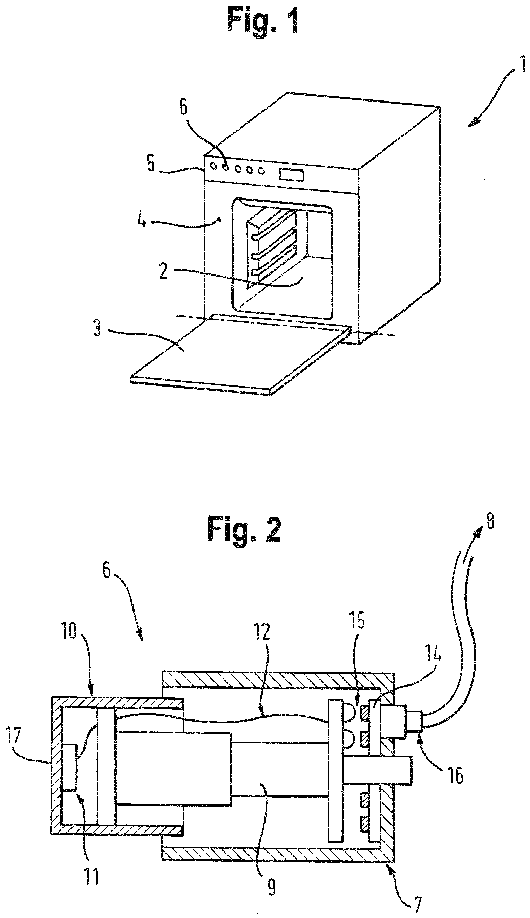

In Fig. 1 ist in einer perspektivischen Darstellung ein Gargerät 1 zum Zubereiten von Lebensmitteln gezeigt, welches im Ausführungsbeispiel ein Backofen ist. Das Gargerät 1 umfasst einen Garraum 2 zur Zubereitung von Lebensmitteln. Dieser Garraum 2 wird von einer gelenkig angeschlagenen Tür 3 verschlossen. Dabei bildet die Tür 3 einen wesentlichen Anteil an der Gerätefront 4, welche die dem Nutzer zugewandte Sichtfläche des Gargerätes bildet. Die Gerätefront 4 weist zudem einen Bedienabschnitt 5 auf, der den Nutzer die Eingabe von Systemparametern, wie z. B. Heizart oder Heiztemperatur dient. Diese Eingaben erfolgen in der Regel über Bedienelemente 6, wie z. B. Knebel, Drehknebel, Drucktasten, Mehrwegetasten, Touchbedienungen. Der Bedienabschnitt weist neben Bedienelementen 6 auch Ausgabeelemente, wie z. B. ein Display auf.

Fig. 2 zeigt eine schematische Darstellung eines Bedienelements 6 in seiner geschnittenen Seitenansicht. Das hier als versenkbarer Drehknebel exemplarisch dargestelltes Bedienelement 6 eines Haushaltsgeräts dient zur Verstellung der Systemparameter. Dazu ist das Bedienelement 6 in den Bedienabschnitt 5 eingelassen, und bildet mit den anderen Systemkomponenten eine einheitliche, vorzugsweise ebene Gerätefront 4. Dazu ist das Gehäuse, auch als Schaltergriffaufnahme bezeichnet, flächenbündig zur Gerätefront 4 angebracht. Das Gehäuse 7 weist eine Versenkmechanik 9 auf, die eine Kappe 10 rotatorisch und versenkbar lagert. Die Kappe 10 dient dem Nutzer als greifbares Eingabeelement, welches der durch Drücken und Drehen zur Werteverstellung betätigt. Mittels der Versenkmechanik 9 ist die Kappe 10 derart gelagert, dass sie in einer ersten Position soweit vor der Gerätefront angeordnet ist, dass sie vom Nutzer gut greifbar und drehbar ist. Wird das Bedienelement 6 nicht benötigt, z. B. im ausgeschalteten Zustand des Gargeräts, in einem Standby-Betrieb oder soll das Bedienelement nicht für Kinder greifbar sein, wird die Kappe 10 in ihrer zweiten Position von der Versenkmechanik 9 derart im Gehäuse 7 aufgenommen, dass die Front der Kappe 10 bündig mit der Gerätefront 4 abschließt. Um dem Haushaltsgerät ein kabelloses Kommunikationssystem mit verbesserten Empfangseigenschaften bereitzustellen, weist das Bedienelement 6 zumindest ein Bauteil eines Kommunikationssystems 8 auf. Das Kommunikationssystem 8 besteht aus Hart- und Softwarekomponenten, die im Gargerät 1 angeordnet sind und vorzugsweise kabelgebunden, aber auch alternativ drahtlos mit dem Bedienelement 6 verbunden sind. Erfindungsgemäß weist die Kappe 10 des Bedienelements 6 einen Sender-/Empfänger 11 des Kommunikationssystems 8, der geeignet ist, Datenübertragungsformen, wie z. B. WLAN, Bluetooth, Infrarot oder ähnliche bekannte Systeme zu empfangen oder zu senden. Im nicht erfindungsgemäßen Ausführungsbeispiel ist die Sender-/Empfängereinheit 11 von vorne gesehen mittig unter der Kappe 10 angeordnet, wobei die Verbindung verbessert wird, wenn die Kappe eine Aussparung besitzt und/oder aus einem Material gefertigt ist, welches die Strahlen durch die Kappe zur Sender- und Empfängereinheit passieren lässt. Alternativ dazu ist die Sender-/Empfängereinheit 11 stirnseitig auf der Kappe oder an der Mantelfläche der Kappe oder als Wand um die Kappe angebracht. Die Erfindung sieht vor, die Kappe selbst aus einem leitfähigen Material zu gestalten, so dass die Kappe oder deren Beschichtung als Antenne dient. Gemäß dem Ausführungsbeispiel aus Fig. 2 werden die empfangenen oder gesendeten Daten über flexible Leiterbahnen 12 an das Kommunikationssystem 8 weitergegeben. Zur Überbrückung der starr am Gargerät befestigten Gehäuseseite und der drehbar gelagerten Elemente der Bedienelemente 6 befindet sich gehäuseseitig eine Platine mit Leiterbahnen 14, die durch drehbar gelagerte Schleifkontakte 15 mit der elektrischen Spannung versorgt wird. Zur einfachen Montage des im Gargerät 1 befindlichen Kommunikationssystems 8 mit der Antennenfunktion des Bedienelements 6 befindet sich an der rückseitigen Gehäuseseite 7 ein Steckerelement 16. Um den Nutzer des Gargeräts 1 ein Feedback über die Funktion des Kommunikationssystems 8, insbesondere über die Qualität und/oder Quantität der Datenkommunikation und Sendeeigenschaften zu geben, ist am Bedienelement 6, insbesondere an der Kappe 10 oder in unmittelbarer Nähe dazu ein Anzeigeelement 17 vorgesehen. Dieses Anzeigeelement kann sowohl als zumindest eine LED-Anzeigenelement ausgeführt sein, als mehrfarbiges Anzeigenelement ausgeführt, als Siebensegmentanzeige oder als Volltextdisplay in Art eines Bildschirms ausgeführt sein. Dieses Anzeigenelement 17 kann sowohl stirnseitig auf der Kappe 10 des Bedienelements 6 angeordnet als auch umlaufend oder punktuell auf der Mantelfläche der Kappe 10 angeordnet sein. Alternativ ist dieses Anzeigeelement in unmittelbarer Nähe zum Bedienelement 6, insbesondere auf der Anzeigevorrichtung des Bedienabschnitts 5 angebracht.

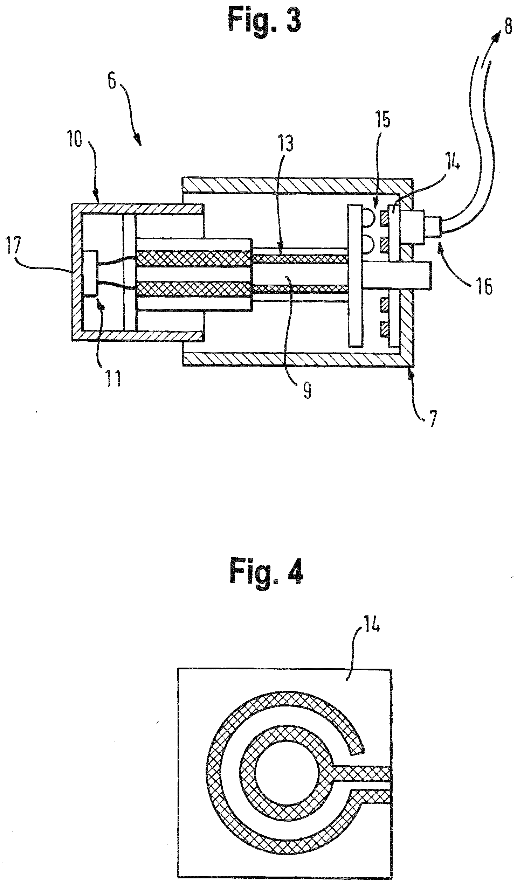

Fig. 3 zeigt eine schematische Darstellung des Bedienelements in einer zweiten Ausführungsform. Dabei erfolgt die Datenübertragung zwischen dem Kommunikationssystem 8 und der Sender-/Empfängereinheit 11 über in die Versenkmechanik 9 eingespritzte Leiterbahnen 13. Diese ermöglichen sowohl im ausgefahrenen Zustand des Bedienelements 6 sowie im eingefahrenen Zustand eine sichere Kontaktierung, da auf flexible Teile verzichtet werden kann.

Fig. 4 zeigt eine schematische Darstellung einer Platine mit Leiterbahnen eines erfindungsgemäßen Bedienelements 6. Diese Platine 14 befindet sich auf der rückseitigen Gehäusewand 7 zur Kontaktierung der mittels der Drehbewegung des Nutzers auf die Versenkmechanik 9 rotatorisch wirkende Bewegung, um deren elektrische Kontaktierung zwischen Sender- und Empfängersystem 11 mit dem Kommunikationssystem 8 sicherzustellen. Die dazu notwendigen zwei elektrischen Phasen werden über zwei separate Leitungen von der Sender- und der Empfängereinheit 11 über Leiterbahnen den Schleifkontakten 15 zugeführt, welche die Platine mit ihren Leiterbahnen permanent kontaktiert. Dazu ist ein wie in Fig. 4 gezeigtes Leiterbahnenbild, bestehend aus einer ersten Leiterbahn in Form eines Kreises mit Steg und einer zweiten Leiterbahn, die den Kreis konzentrisch umschließt von Vorteil.

Vorzugsweise ist der Gegenstand der Erfindung ein Gargerät mit einem vorangegangen beschriebenem Bedienelement.

Im Sinne einer Datenkommunikationseinrichtung wird unter dem Begriff Empfang und Empfangsstärke immer auch das Senden und deren Sendestärke verstanden.

Unabhängig von dem gezeigten Ausführungsbeispiel ist es auch möglich, die Sende-/Empfangseinheit 11 in einem Element auszuführen, das nicht zur Werteverstellung angedacht ist, sondern lediglich und in Art eines Kugelschreibers ein- und ausklickbar ist.

### BEZUGSZEICHENLISTE

- 1: Gargerät
- 2: Garraum
- 3: Tür
- 4: Gerätefront
- 5: Bedienabschnitt
- 6: Bedienelement
- 7: Gehäuse
- 8: Kommunikationssystem
- 9: Versenkmechanik
- 10: Kappe
- 11: Sender-/Empfänger
- 12: flexible Leiterbahn
- 13: eingespritzte Leiterbahn
- 14: Platine mit Leiterbahnen
- 15: Schleifkontakte
- 16: Steckerelement
- 17: Anzeigeelement

## Patentansprüche

1. Haushaltsgerät, insbesondere Gargerät (1), mit einem in eine Gerätefront (4) versenkbar ausgebildeten Bedienelement, vorzugsweise ein Drehwähler zur Werte- und/oder Parameterverstellung des Haushaltsgeräts, wobei das Bedienelement (6) mit einer Antenne zur Kommunikation mit einer externen Datenquelle ausgeführt ist, **dadurch gekennzeichnet, dass** eine Kappe (10) des Bedienelements (6) als Antenne ausgeführt ist.

2. Haushaltsgerät nach Anspruch 1, **dadurch gekennzeichnet, dass** zumindest die Kappe (10) des Bedienelements (6) in die Gerätefront (4) versenkbar ausgebildet ist.

3. Haushaltsgerät nach einem der vorangegangenen Ansprüche, **dadurch gekennzeichnet, dass** das Bedienelement (6) flexible Leiterbahnen (12) aufweist.

4. Haushaltsgerät nach Anspruch 1 oder 2, **dadurch gekennzeichnet, dass** das Bedienelement (6) eingespritzte Leiterbahnen (13) aufweist.

5. Haushaltsgerät nach einem der vorangegangenen Ansprüche, **dadurch gekennzeichnet, dass** das Bedienelement (6) eine elektrische Platine mit Leiterbahnen (14) zur Kontaktierung aufweist.

6. Haushaltsgerät nach einem der vorangegangenen Ansprüche, **dadurch gekennzeichnet, dass** das Bedienelement (6) ein Anzeigenelement (17) aufweist, dass zumindest den Empfang, den Versand oder die Empfangsqualität anzeigt.

7. Haushaltsgerät nach einem der vorangegangenen Ansprüche, **dadurch gekennzeichnet, dass** das Haushaltsgerät ein Kommunikationssystem (8) und zumindest ein Bedienelement (6) aufweist.

8. Haushaltsgerät nach Anspruch 7, **dadurch gekennzeichnet, dass** das Bedienelement (6) derart an der Gerätefront (4) angeordnet ist, dass zumindest ein Bauteil des Kommunikationssystems (8) zumindest in einer Betriebsstellung vor der Gerätefront (4) angeordnet ist.

## Claims

1. Domestic appliance, in particular cooking appliance (1) with a control element embodied to be retractable in an appliance front (4), preferably a dial for adjusting the values and/or parameters of the domestic appliance, wherein the control element (6) is embodied with an antenna for communication with an external data source, **characterised in that** a cap (10) of the control element (6) is embodied as an antenna.

2. Domestic appliance according to claim 1, **characterised in that** at least the cap (10) of the control element (6) is embodied to be retractable in the appliance front (4).

3. Domestic appliance according to one of the preceding claims, **characterised in that** the control element (6) has flexible conductor paths (12).

4. Domestic appliance according to claim 1 or 2, **characterised in that** the control element (6) has injected conductor paths (13).

5. Domestic appliance according to one of the preceding claims, **characterised in that** the control element (6) has an electrical printed circuit board with conductor paths (14) for contacting purposes.

6. Domestic appliance according to one of the preceding claims, **characterised in that** the control element (6) has a display element (17) which indicates at least the receipt, the dispatch or the receive quality.

7. Domestic appliance according to one of the preceding claims, **characterised in that** the domestic appliance has a communication system (8) and at least one control element (6).

8. Domestic appliance according to claim 7, **characterised in that** the control element (6) is arranged on the appliance front (4) such that at least one component of the communication system (8) is arranged at least in an operating position in front of the appliance front (4).

## Revendications

1. Appareil ménager, en particulier appareil de cuisson à la vapeur (1), comportant un organe de commande constitué sous forme escamotable dans une face frontale (4) de l'appareil, de préférence un sélecteur rotatif pour le réglage de valeurs et/ou de paramètres de l'appareil ménager, dans lequel l'organe de commande (6) est réalisé avec une antenne pour la communication avec une source de données externe, **caractérisé en ce qu'**un capuchon (10) de l'organe de commande (6) est réalisé sous forme d'antenne.

2. Appareil ménager selon la revendication 1, **caractérisé en ce qu'**au moins le capuchon (10) de l'organe de commande (6) est constitué sous forme escamotable dans la face frontale (4) de l'appareil.

3. Appareil ménager selon l'une des revendications précédentes, **caractérisé en ce que** l'organe de commande (6) comprend des pistes conductrices flexibles (12).

4. Appareil ménager selon la revendication 1 ou 2, **caractérisé en ce que** l'organe de commande (6) comprend des pistes conductrices injectées (13).

5. Appareil ménager selon l'une des revendications précédentes, **caractérisé en ce que** l'organe de commande (6) comprend une platine électrique avec des pistes conductrices (14) pour la mise en contact électrique.

6. Appareil ménager selon l'une des revendications précédentes, **caractérisé en ce que** l'organe de commande (6) comprend un organe d'affichage (17) qui affiche au moins la réception, l'émission ou la qualité de réception.

7. Appareil ménager selon l'une des revendications précédentes, **caractérisé en ce que** l'appareil ménager comprend un système de communication (8) et au moins un organe de commande (6).

8. Appareil ménager selon la revendication 7, **caractérisé en ce que** l'organe de commande (6) est disposé sur la face frontale (4) de l'appareil de telle sorte qu'au moins un composant du système de communication (8) soit disposé au moins dans une position de fonctionnement sur le devant de la face frontale (4) de l'appareil.
